# EUROPEAN PATENT SPECIFICATION

(11) **EP 0 771 846 B1**
(45) Date of publication and mention of the grant of the patent: **16.01.2002**
(21) Application number: 96202977.3
(22) Date of filing: 25.10.1996
(51) Int. Cl.: C08L 53/02, C08L 51/00, B32B 27/08

(54) **Multilayer polymer system comprising at least one engineering thermoplast layer and at least one soft touch composition layer, and compositions to be used therefor**
Mehrschichtiges Polymersystem, das mindestens eine technische thermoplastische Schicht und mindestens eine weiche Berührungszusammensetzungsschicht enthält, und zu deren Herstellung verwendete Zusammensetzungen
Système polymère multicouche comprenant au moins une couche de thermoplaste de spécialités et une couche de composition douce au toucher, et compositions à ces effets

(30) Priority: 26.10.1995 EP 95307632; 28.02.1996 EP 96301367
(43) Date of publication of application: 07.05.1997
(73) Proprietor: KRATON Polymers Research B.V., 1031 CM Amsterdam (NL)
(72) Inventor: Mace, Jean Michel, 1348 Ottignies, Louvain-La-Neuve (BE); Moerenhout, Jacques, 1348 Ottignies, Louvain-La-Neuve (BE); Marks, Nicolaas, 1348 Ottignies, Louvain-La-Neuve (BE)
(74) Representative: Kortekaas, Marcellinus C. J. A.

(56) References cited:
- EP-A- 0 085 115
- EP-A- 0 398 758
- EP-A- 0 409 580
- US-A- 4 332 858
- US-A- 4 427 828
- US-A- 5 371 141
- US-H- H 731
- DATABASE "CHEMICAL ABSTRACTS" (HOST: STN); Abs. 114: 208 838, Colombus, OH, USA; & JP-A-02 217 683 (TOYOBO Co., Ltd) 30 August 1990 XP002022965
- DATABASE "CHEMICAL ABSTRACTS" (HOST: STN); Abs.125: 117 011, Colombus, OH, USA; & JP-A-08 156 182 (TORAY IND., JAPAN) 18 June 1996 XP002022966
- DATABASE "CHEMICAL ABSTRACTS" (HOST: STN); Abs.125: 144 616, Colombus, OH, USA; & JP-A-08 132 459 (TORAY IND., JAPAN) 28 May 1996 XP002022967

## Description

The present invention is relating to a multilayer polymer system, comprising at least one engineering thermoplast layer and at least one soft touch layer, to compositions to be used therefore, and to shaped articles derived from said system.

In particular the invention is relating to a multilayer polymer system, comprising at least one soft touch layer, composed of at least an optionally selectively hydrogenated block copolymer, derived from a monovinyl aromatic monomer and a conjugated diene monomer, and a polar engineering thermoplast and a plasticizer, in combination with at least one polar engineering thermoplast layer, and to shaped articles derived from said system.

Components for tools, appliances and automotive are increasingly designed to combine a structural rigid plastic layer with an overmoulded soft block copolymer containing composition for good grip and/or soft touch.

More in particular there has developed an increasing need for strongly fusion bound combinations of a relatively hard, rigid thermoplastic engineering polymer component, such as polyamides (e.g. Nylon 6, Nylon 6,6), polycarbonates, polymethylmethacrylate and polyesters derived from aromatic acids, and a relatively soft touch component comprising a styrenic block copolymer, the soft layer of which may act as sealing element or as element enabling good grip, in particular in electric tools and electric appliances having soft handles.

It is an object of the present invention to provide such multilayer systems, which meet the present bonding requirements and which can be manufactured in a one step operation i.e. a comoulding or coextrusion step, in order to save production costs as compared to the use of two separate moulding steps.

From US patent no. 4,332,858 multilayer laminates were known, comprising at least one A-B double layer structure, wherein said layer A comprised at least one material selected from the group consisting of olefin polymers, polyamide polymers, polyacrylate polymers polyether polymers, polycarbonate polymers, polyurethane polymers, vinylidene chloride polymers, thermosetting resins, vulcanised rubbers, glass and paper and said B layer comprised mainly a modified block copolymer in which an unsaturated carboxylic acid or its derivative had been grafted on a styrene-butadiene block copolymer of straight chain structure, branched chain structure or radial structure or combination thereof. However, not any reference was made to the use of block copolymers, comprising in particular selectively hydrogenated poly(butadiene) blocks.

From U.S. patent no. 5,002,625 a process was known for producing a composite moulded product by fusion-bonding a thermoplastic elastomer composition to a moulded piece, which had previously been formed from a synthetic resin material, and which had a higher hardness (JIS Shore hardness A scale) than that of a moulded piece formed from said thermoplastic elastomer composition, or by fusion bonding a synthetic resin material to a moulded piece, which had previously been formed from a thermoplastic elastomer composition and which had a lower hardness than that of a moulded piece formed from said synthetic resin material, wherein said thermoplastic elastomer composition comprised: 100 parts by weight of a thermoplastic elastomer and 25 to 185 parts by weight of a polyether block amide.

The thermoplastic elastomer could be selected from hydrogenated SBS block copolymer, olefin elastomer, diene elastomer urethane elastomer and plasticized polyvinylchloride. As engineering plastics were actually used polycarbonates, Acrylonitrile-Butadiene-Styrene resin, methacrylate resin, Nylon 11 and Nylon 12.

The complete multilayered article was always produced by two separate moulding process steps, i.e. injection moulding of e.g. the polycarbonate piece, followed by fusion bonding the thermoplastic elastomer to the polycarbonate body portion through an injection moulding process step.

From the US patent no. 5,149,589 a thermoplastic elastomer composition was known which was fusion bonded to a moulded piece, which was formed from a rigid synthetic resin material to form a composite moulded product, wherein said thermoplastic elastomer composition comprised:
(1) 100 parts by weight of a thermoplastic elastomer selected from the group consisting of a hydrogenated SBS block copolymer, olefin elastomer, diene elastomer and poly(urethane) elastomer, and
(2) 25 to 185 parts by weight of a thermoplastic polyester elastomer, said thermoplastic polyester elastomer being a polyether-ester copolymer, which had a polyester segment that was prepared from an aromatic dicarboxylic acid and a short-chain glycol, and a polyether segment which had been prepared from an aromatic dicarboxylic acid and a polyalkylene glycol.

The synthetic resin material to be used was mentioned to be selected from polycarbonate, Nylon 11, Nylon 12, ABS resin and methacrylate resin.

The complete multilayered article was always produced by two separate moulding process steps, i.e. injection moulding of e.g. the polycarbonate piece, followed by fusion bonding the thermoplastic elastomer composition to the polycarbonate body portion through an injection moulding process step.

It will be appreciated that a disadvantage of the fusion bound multilayer polymer systems according to said both U.S. patents was formed by the operation in two separate moulding steps, while a specific tailor made, relatively expensive polyether and/or polyester block copolymer had to be used in the elastomeric composition.

From U.S. patent no. 5,371,141 was known a polymer composition comprising:
80% by weight of a linear Nylon 6, 6 polyamide, having a number average molecular weight of at least 5000 and a melting point in excess of 200°C;
20% by weight of a 1:1 blend of an unmodified poly(styrene)-hydrogenated poly(butadiene)-poly(styrene) block copolymer, containing 29 wt% of the styrene, and a modified poly(styrene)-hydrogenated poly(butadiene)-poly(styrene) block copolymer containing 29 wt% of the styrene, and having maleic anhydride groups grafted to the hydrogenated butadiene blocks in an amount of 1.6 wt% of the modified block copolymer;
and showing an ¹/₈" Notched Izod impact strength of 22.9 ft-lb/inch at room temperature.

However, not any reference was made to fusion bonding between relatively hard, rigid and relatively soft touch polymer layers.

As a result of extensive research and experimentation such multilayer polymer systems, which appear to meet the modern requirements, have been surprisingly found.

Accordingly, the present invention is relating to a multilayer polymer composition, comprising at least one relatively soft touch layer comprising at least one block copolymer, derived from a monovinyl aromatic monomer and a conjugated diene monomer, and at least one layer of a relatively hard, rigid thermoplastic, which have intimate contact with each other,
characterised in that:
(a) the relatively soft touch layer comprises a block copolymer composition comprising
   (i) a polar engineering thermoplast selected from polyamides, polycarbonates, polymethylmethacrylate and polyesters derived from an aromatic acid or any combination thereof in an amount of from 1 to 50 wt%,
   (ii) an amount of 0 to 80 wt% of a selectively hydrogenated block copolymer, having at least two poly(predominantly monovinyl aromatic) blocks and at least one poly(predominantly conjugated diene) block, wherein the residual ethylenic unsaturation after hydrogenation being at most 5% and preferably at most 2%.
   (iii) an amount of from 5 to 85 wt% of a selectively hydrogenated block copolymer, having at least two poly(predominantly monovinyl aromatic) blocks and at least one poly(predominantly conjugated diene) block wherein the residual ethylenic unsaturation after hydrogenation being at most 5% and preferably at most 2%, said block copolymer being functionalised by means of introduced polar groups such as carboxyl, carboxylic acid, acid anhydride, amide, amine and epoxy;
   (iv) a plasticizer, in an amount of from 0 to 45,5 wt%, all ingredients amounts relative to the weight of the total block copolymer composition and the sum of the respective amounts of ingredient (i) - (iv) being 100 wt%; and
(b) the relatively hard, rigid layer comprises a polar engineering thermoplast.

Suitable polar engineering thermoplasts which can be applied as component (a,i) and component (b) may be selected from polyamide such as NYLON 6,6 (PA6,6) or NYLON 6 (PA6), polycarbonates (PC), polymethylmethacrylate (PMMA) and polyester derived from an aromatic acid such as polyethyleneterephtalate (PET), polypropylene terephtalate (PPT) and polybutylene terephtalate (PBT) or any combination thereof. Such engineering thermoplasts can optionally be mixed with polyurethane resins such as VANDAR (trademark), polycarbonates, and modified polycarbonates. Preferred polyamides include Nylon 6 and Nylon 6,6. Preferred polyesters include those derived from aromatic acids such as PET, PPT and PBT. Most preferred are PET or PBT. Most preferably the engineering thermoplasts to be used as component (a,i) are polycarbonates. Most preferably the engineering thermoplasts to be used as component (b) are the polyamides mentioned hereinbefore and polycarbonates.

The preferred amount of component (a, i) is in the range of from 3 to 35 wt%, more preferably in the range of from 10 to 35 wt%. The preferred amount of component (a, ii) is in the range of from 3 to 70 wt% more preferably in the range of from 10 to 70 wt%, and the preferred range of component (a, iii) is in the range of from 15 to 75 wt%.

The preferred amount of component (a, iv) is in the range of from 5 to 40%, more preferably in the range of from 5 to 30 wt%.

It will be appreciated that the hydrogenated block copolymer components (a, ii) and (a, iii) may be different or the same and they may be linear or branched, with the term "branched" also including symmetric or assymmetric radial and star structures. Functionalised hydrogenated block copolymers to be used as component (a, iii) may be prepared by methods known from e.g. European patents 0085115, 0103148, 0215501, 0216347, 0262691, European patent applications no. 0349085, no. 0450694, no. 0458379 and US patent nos. 4174358, 4429076, 4427828, 4628072, 4657971, 4844471. Preferably functionalised hydrogenated block tri-copolymers component(s) (a, iii), are used of the formula A-B-C, wherein the blocks A and C being the same or different, have been derived from predominantly styrene and wherein the B block have been derived from predominantly butadiene or isoprene, the block B being substantially hydrogenated and grafted with preferably an unsaturated acid in the presence of an organic peroxide, the unsaturated acid being grafted in an amount of up to 5 wt% and preferably in an amount of from 0.5 wt% to 2 wt%. More preferably the hydrogenated block copolymers have been grafted with a diacid and most preferably with maleic acid.

According to more preferred embodiments ABC block copolymers are used as components (a, ii) and (a, iii) wherein A and C are about the same, have been derived from substantially pure styrene, and have weight average molecular weights in the range of from 3000 to 60,000 wherein the block B prior to hydrogenation has been derived from substantially pure 1,3 butadiene and has a weight average molecular weight in the range of from 10,000 to 150,000, and wherein the blocks A and C constitute from 10 to 40 wt% of the total block copolymer weight.

Examples of suitable commercial block copolymer grades, which can be used for the components (a, ii) are KRATON G 1650, KRATON G 1651, KRATON G 1652, KRATON G 1653, KRATON G 1654, KRATON G 1657 and KRATON G 1726. Examples of suitable commercial block copolymer grades which can be used as component (a, iii) are KRATON FG 1901 or KRATON FG 1924.

With the term "predominantly" is meant that the respective blocks A, B and C may be mainly derived from a monovinyl aromatic monomer or a conjugated diene monomer, which monomers may be mixed with other structurally related or non related co-monomers e.g. styrene as main component and small amounts (up to 10 wt%) of other monomers (α,methylstyrene or butadiene) or butadiene mixed with isoprene and/or with styrene.

It will be appreciated that as ingredient (a, iv) a great variety of plasticizers can be successfully applied.

Various plasticizing oils are useful as extender in the compositions to be used according to the present invention.

Plasticizing oils which have been found useful include petroleum derived oils, olefin oligomers, and low molecular weight polymers, as well as vegetable and animal oil which may be employed are relatively high boiling materials, containing only a minor proportion of aromatic hydrocarbons preferably less than 20% and more preferably less than 10% by weight of the oil. Most preferably the oil may be totally non-aromatic.

The oligomers may be poly(α-olefin) such as poly(butylene), poly(dodecene), hydrogenated poly(isoprene), hydrogenated poly(butadiene), hydrogenated poly(piperylene) and hydrogenated copolymers of piperylene and isoprene, having average molecular weights of between 350 and 10,000.

Vegetable and animal oils include glyceryl esters of the usual fatty acids and polymerisation products thereof.

Examples of a preferred paraffinic oil are PRIMOL 352 (PRIMOL is a trademark) and the NAPVIS and HYVIS (trademarks) polyolefins, having a molecular weight in the range of from 500 to 6,000, and ETHYLFLO grades (ETHYLFLO is a trademark).

Preferably paraffinic oil or low molecular weight poly(α-olefin) is used as plasticizer in at least one of the layers of the multilayer polymer blend system.

It will be appreciated that a significant advantage is formed by the fact that the multilayer polymer blend systems according to the present invention can be produced in one single comoulding or coextrusion step, which represents a significant cost savings, while the adhesion strength between the layers meets the highest modern requirements.

The multilayer polymers blend systems according to the present invention can also be produced by double injection moulding, cocompression moulding and other usual moulding processes.

It will be appreciated that the compositions (a) and (b), from which the multilayer polymer blend systems are derived, may in addition contain one or more auxiliaries and more in particular polyolefins (e.g. polypropylene such as PY 6100 (ex Shell)), epoxy resins such as EPON 1004 (ex Shell), α, methylstyrene resins such as KRISTALEX F 120 (ex Hercules; KRISTALEX is a trademark), antioxidants such as Irganox 1010 and PS 800 (both ex Ciba Geigy), fillers and/or stabilizers. Suitable examples of such fillers include glass fibres, talc, or calcium carbonate which may provide additional stiffness to one of the colayers.

It will be appreciated that the comoulded multilayer polymer blend systems according to the present invention can be prepared by blending the individual constituents for each layer or starting from preblends containing two or more of the respective constituents.

Another aspect of the present invention is formed by the soft touch layer block copolymer compositions of component (a) of the multilayer polymer system as defined hereinbefore.

Still another aspect of the present invention is formed by the shaped articles derived from the multilayer polymer systems as hereinbefore specified such as electric tools, appliances and automotive parts.

Preferred multilayer polymer systems have been found to be composed of a rigid, hard layer (component b) derived from a polycarbonate or a polyamide such as Nylon 6,6, Nylon 6 and a soft touch composition (a) comprising a polycarbonate as component (a,i), which shows an excellent fuse on bond strength.

The invention will be further illustrated by the following examples.

### Example 1

### Preparation of compositions

Two multilayer polymer compositions according to the present invention (I) and (II) as listed in the Table 1, were prepared by first pre-soaking the KRATON G block copolymer with oil in a 5 litres Papenmeier mixer for 20 minutes, whereafter all other listed ingredients were added and the resulting mixture was stirred for another 5 minutes. The obtained preblend was subsequently dried for one night in a vacuum oven at 80°C. Said preblends were compounded. The preblends were compounded using a Werner and Pfleiderer ZSK twin screw corotating extruder. Actual temperature settings of the extruder have been listed in Table 2.

The extrudate strands were cooled in a water bath and subsequently granulated.

The granulated compounds were dried in a vacuum oven at 80°C for one night before being injection moulded into 150 x 150 x 2 mm test plates and overmoulded as a 2 mm thick layer onto premoulded 100 x 150 x 2 mm insert plates of PA6, PA6,6 and PC substrates using a DEMAG D150 injection moulding machine. Injection moulding settings are given in Table 2.

### Adhesion Performance

The adhesion of the compositions I and II onto PA6, PA6,6 and PC substrates was measured according to ASTM D903 using a sample having a width of 20 mm and thickness of 2 mm (on a base plate of the same thickness) and using a test speed of 300 mm/min. The results of the adhesion test are shown in Table 3.

It will be clear from these results that the present polycarbonate modified compounds display an attractive adhesion onto polyamide or polycarbonate substrates.

**Table 1**

| Composition reference | I | II |
|---|---|---|
| Formulation; in phr | | |
| KRATON G-1651 | 40 | 40 |
| KRATON FG-1901X | 60 | 60 |
| PP (PY 6100) | 20 | - |
| KRISTALEX F 120 | 20 | 20 |
| PC (LEXAN 141R) | 20 | 20 |
| CaCO₃ | 150 | - |
| EPON 1004 | 1.5 | - |
| Oil (Primol 352) | 100 | 100 |
| Irganox 1010 | 1.0 | 1.0 |
| PS 800 | 1.0 | 1.0 |

**Table 2**

| Processing Conditions | |
|---|---|
| Compounding conditions on Werner and Pfleiderer twin-screw co-rotating extruder | |
| Temperature settings | 160°C to 260°C to 165°C |
| Actual melt Temperature | 200°C |
| Screw speed | 150 rpm to 350 rpm |
| Torque | 22% |
| Feed rate | 12 kg/h |

Injection moulding conditions for samples I and II on the Demag D150 injection moulding machine.
Sample size; 2 x 150 x 150 mm plates.
Temperature, pressure and time settings
(150 tons clamping force)

| Temperatures | °C | |
|---|---|---|
| Intake zone | | 35 |
| Cylinder heating zone 1 | | 225 |
| Cylinder heating zone 2 | | 240 |
| Cylinder heating zone 3 | | 240 |
| Nozzle heating | | 250 |
| Melt | | 250-260 |
| Mould | | 60 |
| | | |
| Injection time | s | 2.4 |
| Injection Pressure | bar | 127 |
| Holding pressure time | s | 5-15 |
| Holding pressure | bar | 50 |
| Back pressure | bar | 5 |
| Injection speed | % | 30 |

**Table 3**

| Formulation | I/PA6 | I/PA6,6 | II/PC |
|---|---|---|---|
| Peel Adhesion unaged N/20mm | 95 * | 110 * | 75 * |

| | | | |
|---|---|---|---|
| * cohesive failure occurred | | | |

### Example 2

### Preparation of compositions

Additional compositions according to the present invention (III - X) and comparative compositions A - E as listed in the Tables 4, 6 and 7, were prepared in a similar manner as described in Example 1. Actual temperature settings of the extruder have been listed in Tables 5 and 8.

The extrudate strands were cooled in a water bath and subsequently granulated.

The granulated compounds were dried in a vacuum oven at 80°C for one night before being injection moulded into 150 x 150 X2 mm test plates and overmoulded as a 2 mm thick layer onto premoulded 100 x 150 x 2 mm insert plates of Pa6, PA66, PP and VANDAR (a PBT/TPU alloy used in interior automotive parts) using a DEMAG D150 injection moulding machine. Injection moulding settings are given in Table 5 and 8.

### Assessment of the Dispersion of the Ingredients

Optical and electron microscopy were performed on selected compositions to assess the type of dispersion in these compositions.

Furthermore, 10 grams of composition III and comparative compositions A, B and C were placed in a glass jar filled with toluene and allowed to roll overnight on the roller bank. The resulting mixture was filtered through a 100 mesh screen and the amount of undissolved residue measured after one night drying in a vacuum oven. The obtained residues were then compression moulded into films and analysed through FTIR (the results have been listed in Table 4.

### Determination of Mechanical Properties

Dumbbells were cut from injection moulded slabs. Results have been listed in Tables 4, 6 and 7 as average value of samples cut parallel and perpendicular to the mould direction tensile properties were measured according to ASTM D 412.

Angle tear properties were measured according to ISO 34-79.

Shore A hardness was measured after 15 seconds according to ISO 868-1985.

Sample plates were further aged at 95°C for one week and visually checked.

### Adhesion Performance Evaluation

The adhesion of the compounds onto different substrates (PA6 and VANDAR) as listed in Table 4 was checked by hand on the insert-moulded plates, trying to pull the soft overmoulded layer away from the rigid substrate. The adhesion was rated on a scale from 0 to 10. Adhesion 0 means that the two layers could be peeled off without significant effort.

Adhesion 1 to 2, characterising two layers displaying some adhesion, without any melt fusion.

Adhesion 5 and higher: increasingly good adhesion, with possible melt-fusion of the two layers.

### Physical Properties evaluation

The physical properties of compositions III, A and B are typically those of a low hardness, low set material (good elastic recovery). Furthermore, the levels of tensile strength and elongation at break are quite high.

After one week ageing at 95°C in a ventilated air oven, injection moulded plates of Composition A did not display any stress cracking nor dimensional changes. Those of Composition III did not display stress cracking but displayed some dimensional changes (form a square sample to a distorted shape).

### Adhesion Performance Evaluation

All results are gathered in Tables 6 and 7.

Four materials were used as inserts:
- PA6, which was already used as compounding ingredient in Compositions A and III.

Three different injection temperatures were used, (210°C, 230°C and 260°C, the last two being above melt temperature of PA6), as well as some different mould temperatures, (60°C and 120°C).

The evaluation was carried out according to ASTM D903, using a sample having a width of 20 mm and thickness of 2 mm (on a base plate of the same thickness) and using a test speed of 300 mm/min.

### Adhesion of Polyamide modified compounds on Polyamide (see Table 4)

Adhesion of each compound onto PA6 or PA66 was very similar. The results are reported as adhesion onto PA substrate.
- Comparative Compositions A and B did not display satisfactory adhesion onto polyamide substrates at any given temperature.
- Composition III displayed very satisfactory adhesion when injected at 210°C and excellent adhesion when injected at 230°C and above.
- Mould temperature did not have an influence on adhesion behaviour.

From these results, it can be concluded that adhesion onto PA is not a simple function of the ingredients but can be related to the microstructure of the different compounds in the soft composition. PA dispersion in comparative composition A and use of KRATON FG-1901X without PA in comparative composition B did not give rise to any adhesion onto pure PA substrate. On the contrary, composition III with its very small PA6 particle size, obtained through the use of KRATON FG-1901X, gave excellent adhesion to the PA substrates.

Most probably, the maleic anhydride groups present in FG-1901X react with the end-groups of the e.g. the Nylon PA6 or PET to create chemical bonds. This drives such polyamide or polyester into the KRATON G matrix and changes the whole nature of the compound which in turn creates the good adhesion onto PA or PET substrate.

The results of insert moulding trials of various KRATON G compounds modified with PA6 or PET onto PET or PA6 substrates are listed in Tables 6 and 7 while the typical overmoulding conditions have been listed in Table 5.

The PET used in these Tables 6 and 7 were manufactured by SHELL companies:
SR-35 has a typical intrinsic viscosity =0.82 dl/g;
SR-47 has a typical intrinsic viscosity 0.60 dl/g

The compounding conditions for PET modified KRATON G block copolymer compounds in Table 7 on Werner and Pfleiderer twin screw co-rotating extruder.

| | |
|---|---|
| Temperature settings | 180°C to 280°C to 175°C |
| Screw speed | 250 rpm |
| Feed rate | 5 to 10 kg/hr. |

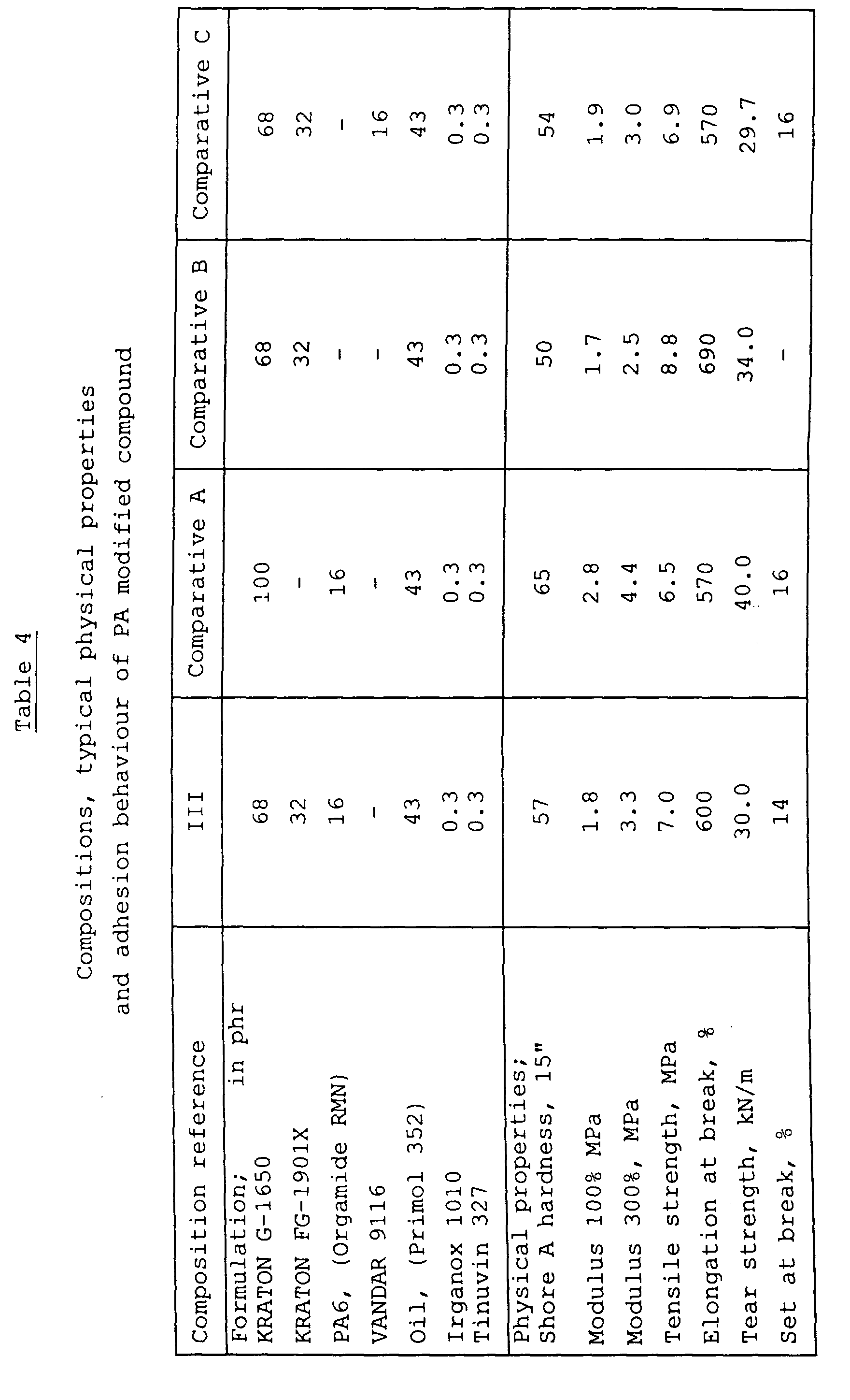

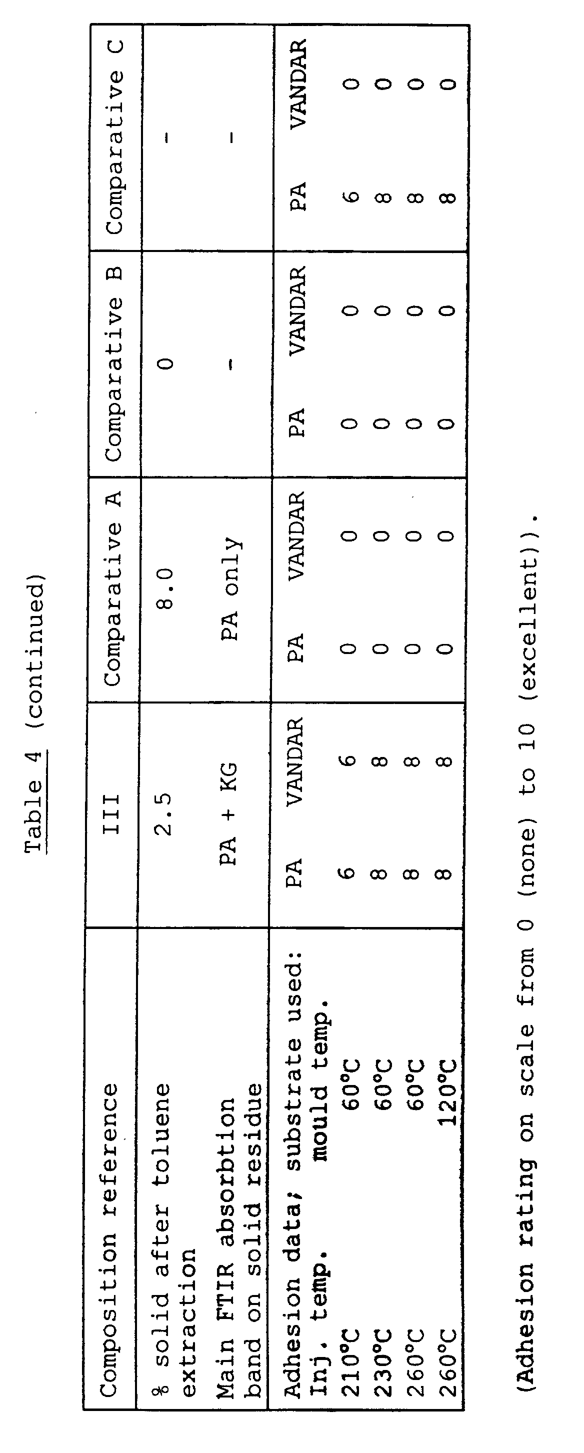

**Table 5**

| Processing Conditions | |
|---|---|
| Compounding conditions on Werner and Pfleiderer twin-screw co-rotating extruder | |
| Temperature settings | 180°C to 240°C to 180°C |
| Actual melt Temperature | 240°C |
| Screw speed | 150 rpm to 250 rpm |
| Torque | 35% |
| Feed rate | 5 kg/h |

Demag injection moulding conditions for samples III and A-C
(210) conditions used for both 2 x 150 x 150 mm plates and 2 mm thick overmouldings: (230) and (260)
conditions only used for 2 mm thick overmouldings.
Equipment: Demag D150 injection moulder
Temperature, pressure and time settings
(150 tons clamping force)

| Temperatures | °C | (210) | (230) | (260) |
|---|---|---|---|---|
| Intake zone | | 35 | 35 | 35 |
| Cylinder heating zone 1 | | 100 | 200 | 230 |
| Cylinder heating zone 2 | | 195 | 210 | 245 |
| Cylinder heating zone 3 | | 205 | 220 | 255 |
| Nozzle heating | | 210 | 230 | 260 |
| Melt | | 210 | 230 | 260 |
| Mould | | 60 | 60 | 60/120 |
| | | | | |
| Injection time | s | 1.03 | 0.87 | 0.75 |
| Injection Pressure | bar | 150 | 150 | 150 |
| Holding pressure time | s | 4.0 | 4.0 | 4.0 |
| Holding pressure | bar | 65 | 65 | 65 |
| Back pressure | bar | 20 | 20 | 20 |
| Injection speed | % | 95 | 95 | 95 |

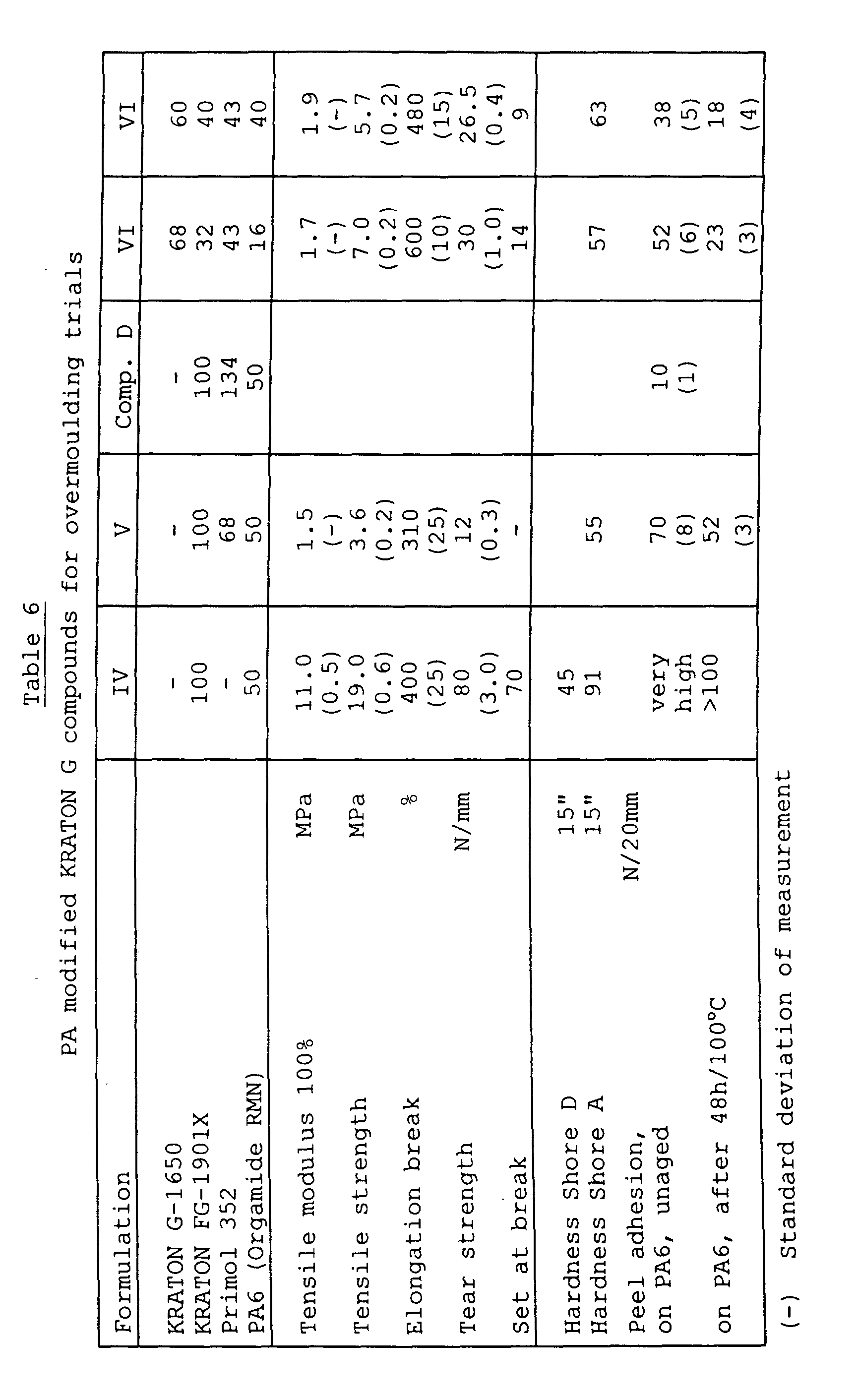

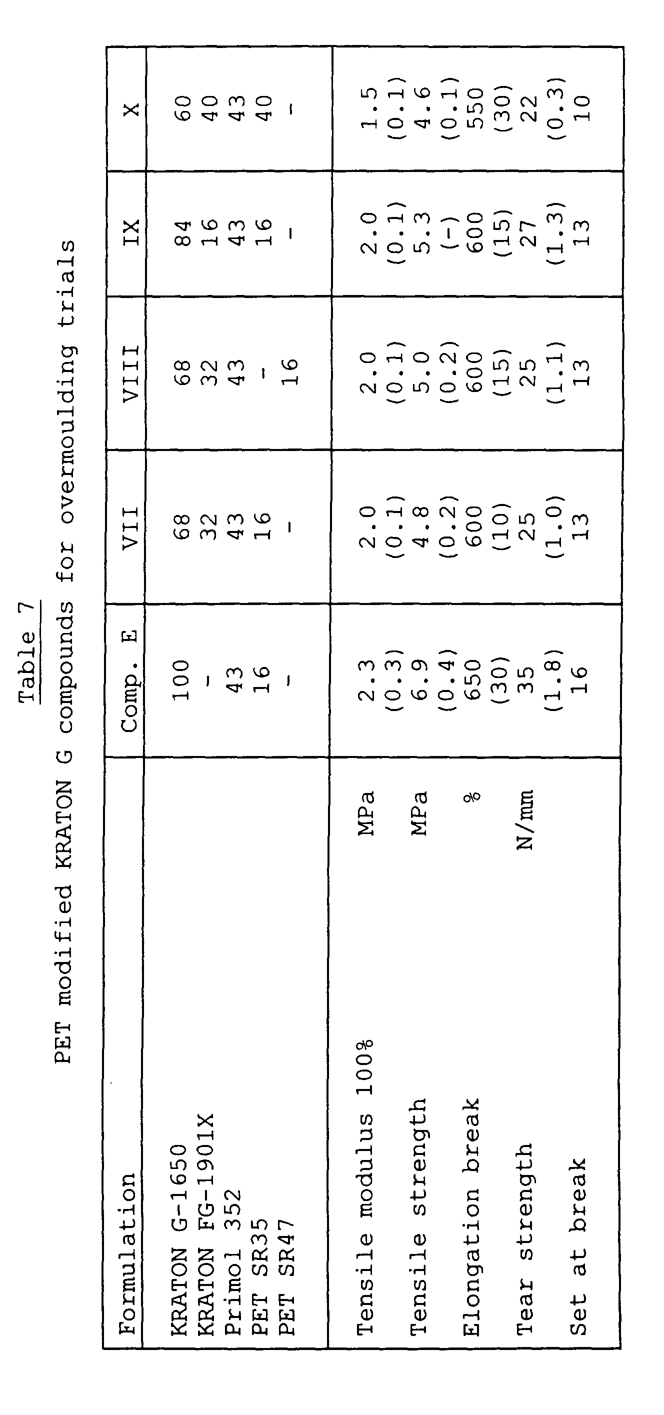

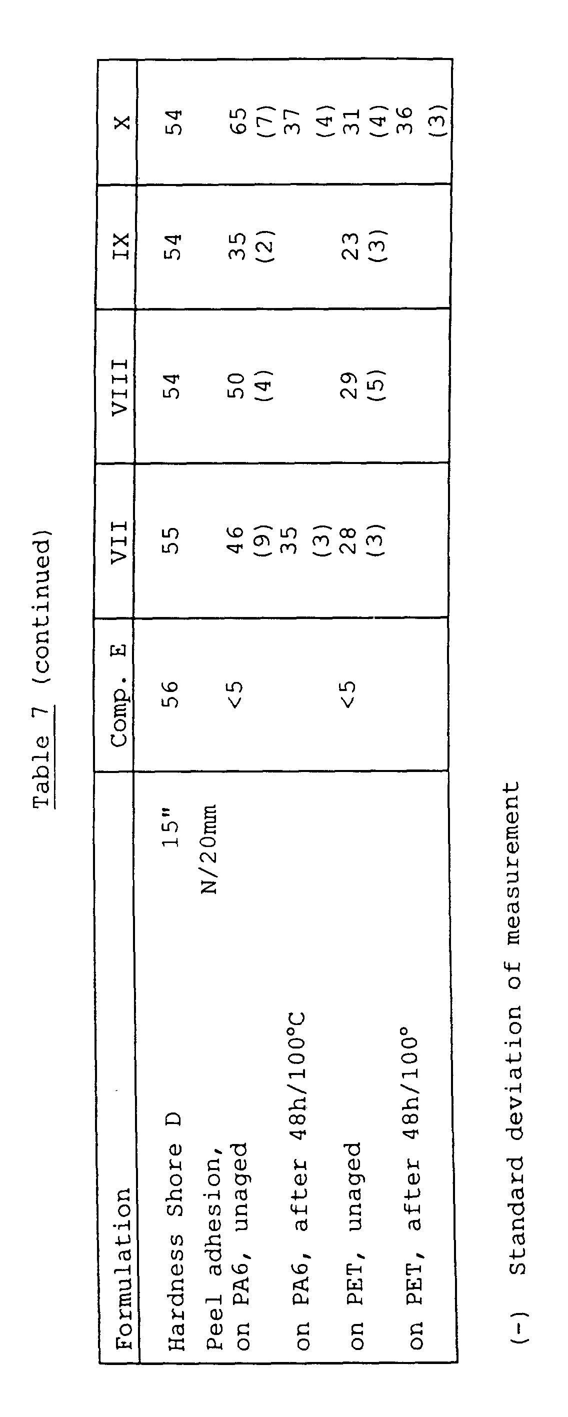

**Table 8**

| Demag typical overmoulding conditions relating to samples D-E (Comparatives) and III - X | | |
|---|---|---|
| Equipment: Demag D150 injection moulder Temperature, pressure and time settings (150 tons clamping force) | | |
| Temperatures | °C | |
| Intake zone | | 35 |
| Cylinder heating zone 1 | | 250 |
| Cylinder heating zone 2 | | 270 |
| Cylinder heating zone 3 | | 280 |
| Nozzle heating | | 290 |
| Melt | | 290 |
| Mould | | 60 |
| | | |
| Injection time | s | 0.75 |
| Injection Pressure | bar | 150 |
| Holding pressure time | s | 4.0 |
| Holding pressure | bar | 65 |
| Back pressure | bar | 20 |
| Injection Speed | % | 95 |

## Claims

1. Soft touch layer block copolymer composition, comprising
(i) a polar engineering thermoplast in an amount of from 1 to 50 wt%,
(ii) an amount of from 0 to 80 wt% of a selectively hydrogenated block copolymer, having at least two poly(predominantly monovinyl aromatic) blocks and at least one poly(predominantly conjugated diene) block, wherein the residual ethylenic unsaturation after hydrogenation being at most 5%,
(iii) an amount of from 5 to 85 wt% of a selectively hydrogenated block copolymer, having at least two poly(predominantly monovinyl aromatic) blocks and at least one poly(predominantly conjugated diene) block wherein the residual ethylenic unsaturation after hydrogenation being at most 5%, said block copolymer being functionalised by means of introduced polar groups,
(iv) a plasticizer, in an amount of from 0 to 45,5 wt%,
all ingredients amounts relative to the weight of the total composition and the sum of the respective amounts of the ingredients (i) - (iv), being 100 wt%,

2. A soft touch layer polymer composition according to claim 1, **characterised in that** the polar engineering thermoplast is selected from polycarbonates (PC), NYLON 6,6, NYLON 6, polyethylene-glycol terephtalate (PET) and polybutylene-glycol terephtalate (PBT).

3. A soft touch layer polymer composition according to any one of claims 1 and 2, **characterised in that** the ethylenic unsaturation in the poly(predominantly conjugated diene) blocks in components (ii) and (iii) after hydrogenation is at most 2%.

4. A soft touch layer polymer composition according to any one of claims 1-3 **characterised in that** the block copolymer component (iii) has been functionalised by means of introduced carboxyl, carboxylic acid, acid anhydride, amide, amine or epoxy groups.

5. A soft touch layer polymer composition according to any one of claims 1-4, **characterised in that** the component (i) is present in the range of from 3 to 35 wt%.

6. A soft touch layer polymer composition according to any one of claims 1-4, **characterised in that** the amount of component (ii) is in the range of from 3 to 70 wt%.

7. A soft touch layer polymer composition according to any one of claims 1-4, **characterised in that** the amount of component (iii) is in the range of from 15 to 75 wt%.

8. A soft touch layer polymer composition according to any one of claims 1-4 **characterised in that** the amount of component (iv) is in the range of form 5 to 40 wt%.

9. Soft touch layer polymer composition according to any one of claims 1-8, **characterised in that** the hydrogenated poly(conjugated diene) blocks of component (iii) have been grafted with an unsaturated acid.

10. Soft touch layer polymer composition according to claim 9, **characterised in that** the poly(conjugated diene) blocks of component (iii) have been grafted with maleic acid.

11. Soft touch layer polymer composition according to any one of claims 1-10, **characterised in that** as plasticizer component (iv) is used paraffinic oil or poly(alfaolefin) oligomers.

12. A multilayer polymer composition, comprising at least one relatively soft touch layer comprising at least one block copolymer, derived from a monovinyl aromatic monomer and a conjugated diene monomer, and at least one layer of a relatively hard, rigid thermoplastic, which have intimate contact with each other, **characterised in that**:
(a) the relatively soft touch layer comprises a block copolymer composition comprising
(i) a polar engineering thermoplast in an amount of from 1 to 50 wt%,
(ii) an amount of from 0 to 80 wt% of a selectively hydrogenated block copolymer, having at least two poly(predominantly monovinyl aromatic) blocks and at least one poly(predominantly conjugated diene) block, wherein the residual ethylenic unsaturation after hydrogenation being at most 5%,
(iii) an amount of from 5 to 85 wt% of a selectively hydrogenated block copolymer, having at least two poly(predominantly monovinyol aromatic) blocks and at least one poly(predominantly conjugated diene) block wherein the residual ethylenic unsaturation after hydrogenation being at most 5%, said block copolymer being funcationalised by means of introduced polar groups,
(iv) a plasticizer, in an amount of from 0 to 50 wt%,
all ingredients amounts relative to the weight of the total block copolymer composition and the sum of the respective amounts of the ingredients (i) - (iv), being 100 wt%; and
(b) the relatively hard, rigid layer, comprises a polar engineering thermoplast.

13. A multilayer composition according to claim 12, **characterised in that** the relatively soft touch layer (component (a)) comprises a block copolymer composition as defined in any one of claims 2-11.

14. A multilayer composition according to claim 12 or 14, **characterised in that** the polar engineering thermoplast to be used as component (b) is selected from polyamides, polycarbonates, polymethylmethacrylate and polyesters derived from an aromatic acid.

15. A multilayer polymer composition according to any one of claims 13-15, **characterised in that** the polar engineering thermoplasts are selected from NYLON 6,6, NYLON 6, polyethylene-glycol terephtalate (PET), polybutylene-glycol terephtalate (PBT) and polycarbonates (PC).

16. Shaped articles derived from a multilayer polymer composition according to any one of claims 12-15.

## Patentansprüche

1. Weichgriffschicht-Blockcopolymerzusammensetzung, die
(i) einen polaren Konstruktionsthermoplasten in einer Menge von 1 bis 50 Gew.-%,
(ii) eine Menge von 0 bis 80 Gew.-% eines selektiv hydrierten Blockcopolymers, das wenigstens zwei Poly(überwiegend Monovinylaromat)blöcke und wenigstens einen Poly(überwiegend konjugiertes Dien)block aufweist, worin die verbliebene ethylenische Unsättigung nach dem Hydrieren höchstens 5% beträgt,
(iii) eine Menge von 5 bis 85 Gew.-% eines selektiv hydrierten Blockcopolymers, das wenigstens zwei Poly (überwiegend Monovinylaromat)blöcke und wenigstens einen Poly(überwiegend konjugiertes Dien)block aufweist, worin die verbliebene ethylenische Unsättigung nach dem Hydrieren höchstens 5% beträgt, welches Blockcopolymer durch eingeführte polare Gruppen funktionalisiert ist;
(iv) einen Weichmacher in einer Menge von 0 bis 45,5 Gew.-% umfaßt,
wobei sämtliche Bestandteilmengen auf das Gewicht der gesamten Zusammensetzung bezogen sind und die Summe der jeweiligen Mengen der Bestandteile (i) bis (iv) 100% beträgt.

2. Weichgriffschicht-Polymerzusammensetzung nach Anspruch 1, **dadurch gekennzeichnet, daß** der polare Konstruktionsthermoplast unter Polycarbonaten (PC), NYLON 6,6, NYLON 6, Polyethylenglycolterephthalat (PET) und Polybutylenglycolterephthalat (PBT) ausgewählt ist.

3. Weichgriffschicht-Polymerzusammensetzung nach einem der Ansprüche 1 und 2, **dadurch gekennzeichnet, daß** die ethylenische Unsättigung in den Poly(überwiegend konjugiertes Dien)blöcken in den Komponenten (ii) und (iii) nach der Hydrierung höchstens 2% beträgt.

4. Weichgriffschicht-Polymerzusammensetzung nach einem der Ansprüche 1 bis 3, **dadurch gekennzeichnet, daß** die Blockcopolymerkomponente (iii) mittels eingeführter Carboxyl-, Carbonsäure-, Säureanhydrid-, Amid-, Amin- oder Epoxygruppen funktionalisiert worden ist.

5. Weichgriffschicht-Polymerzusammensetzung nach einem der Ansprüche 1 bis 4, **dadurch gekennzeichnet, daß** die Komponente (i) in einem Ausmaß von 3 bis 35 Gew.-% zugegen ist.

6. Weichgriffschicht-Polymerzusammensetzung nach einem der Ansprüche 1 bis 4, **dadurch gekennzeichnet, daß** die Menge der Komponente (ii) im Bereich von 3 bis 70 Gew.-% liegt.

7. Weichgriffschicht-Polymerzusammensetzung nach einem der Ansprüche 1 bis 4, **dadurch gekennzeichnet, daß** die Menge der Komponente (iii) im Bereich von 15 bis 75 Gew.-% liegt.

8. Weichgriffschicht-Polymerzusammensetzung nach einem der Ansprüche 1 bis 4, **dadurch gekennzeichnet, daß** die Menge der Komponente (iv) im Bereich von 5 bis 40 Gew.-% liegt.

9. Weichgriffschicht-Polymerzusammensetzung nach einem der Ansprüche 1 bis 8, **dadurch gekennzeichnet, daß** die hydrierten Poly(konjugiertes Dien)blöcke von Komponente (iii) mit einer ungesättigten Säure gepfropft worden sind.

10. Weichgriffschicht-Polymerzusammensetzung nach Anspruch 9, **dadurch gekennzeichnet, daß** die Poly(konjugiertes Dien)blöcke von Komponente (iii) mit Maleinsäure gepfropft worden sind.

11. Weichgriffschicht-Polymerzusammensetzung nach einem der Ansprüche 1 bis 10, **dadurch gekennzeichnet, daß** als Weichmacherkomponente (iv) Paraffinöl oder Poly(alphaolefin) oligomere verwendet werden.

12. Mehrschicht-Polymerzusammensetzung, umfassend wenigstens eine Schicht mit verhältnismäßig weichem Griff, die wenigstens ein von einem monovinylaromatischen Monomer und einem konjugierten Dienmonomer abgeleitetes Blockcopolymer umfaßt, und wenigstens eine Schicht aus einem verhältnismäßig harten, starren Thermoplasten, die in innigem Kontakt miteinander stehen, **dadurch gekennzeichnet, daß**:
(a) die Schicht mit verhältnismäßig weichem Griff eine Blockcopolymerzusammensetzung umfaßt, die
(i) einen polaren Konstruktionsthermoplasten in einer Menge von 1 bis 50 Gew.-%,
(ii) eine Menge von 0 bis 80 Gew.-% eines selektiv hydrierten Blockcopolymers, das wenigstens zwei Poly(überwiegend Monovinylaromat)blöcke und wenigstens einen Poly(überwiegend konjugiertes Dien)block aufweist, worin die verbliebene ethylenische Unsättigung nach dem Hydrieren höchstens 5% beträgt,
(iii) eine Menge von 5 bis 85 Gew.-% eines selektiv hydrierten Blockcopolymers, das wenigstens zwei Poly(überwiegend Monovinylaromat)blöcke und wenigstens einen Poly(überwiegend konjugiertes Dien)block aufweist, worin die verbliebene ethylenische Unsättigung nach dem Hydrieren höchstens 5% beträgt, welches Blockcopolymer durch eingeführte polare Gruppen funktionalisiert ist;
(iv) einen Weichmacher in einer Menge von 0 bis 50 Gew.-% umfaßt, wobei sämtliche Bestandteilmengen auf das Gewicht der gesamten Blockcopolymerzusammensetzung bezogen sind und die Summe der jeweiligen Mengen der Bestandteile (i) bis (iv) 100% beträgt; und
(b) die relativ harte, starre Schicht einen polaren Konstruktionsthermoplasten umfaßt.

13. Mehrschichtzusammensetzung nach Anspruch 12, **dadurch gekennzeichnet, daß** die Schicht mit verhältnismäßig weichem Griff (Komponente (a)) eine Blockcopolymerzusammensetzung, wie in einem der Ansprüche 2 bis 11 definiert, umfaßt.

14. Mehrschichtzusammensetzung nach Anspruch 12 oder 14, **dadurch gekennzeichnet, daß** der als Komponente (b) zu verwendende polare Konstruktionsthermoplast unter Polyamiden, Polycarbonaten, Polymethylmethacrylat und von einer aromatischen Säure abgeleiteten Polyestern ausgewählt ist.

15. Mehrschicht-Polymerzusammensetzung nach einem der Ansprüche 13 bis 15, **dadurch gekennzeichnet, daß** die polaren Konstruktionsthermoplasten unter NYLON 6,6, NYLON 6, Polyethylenglycolterephthalat (PET), Polybutylenglycolterephthalat (PBT) und Polycarbonaten (C) ausgewählt sind.

16. Geformte Gegenstände, abgeleitet von einer Mehrschicht-Polymerzusammensetzung nach einem der Ansprüche 12 bis 15.

## Revendications

1. Composition de copolymère bloc en couche souple au toucher, comprenant :
(i) une matière thermoplastique technique polaire en une quantité de 1 à 50 % en poids,
(ii) une quantité de 0 à 80 % en poids d'un copolymère bloc hydrogéné sélectivement, comportant au moins deux blocs poly(monovinyl aromatiques essentiellement) et au moins un bloc de poly(diène conjugué essentiellement), l'insaturation éthylénique résiduelle après hydrogénation étant de tout au plus 5 %,
(iii) une quantité de 5 à 85 % en poids d'un copolymère bloc hydrogéné sélectivement, comportant au moins deux blocs poly(monovinyl aromatiques essentiellement) et au moins un bloc de poly(diène conjugué essentiellement), l'insaturation éthylénique résiduelle après hydrogénation étant de tout au plus 5 %, ledit copolymère bloc étant fonctionnalisé au moyen de groupes polaires introduits,
(iv) un plastifiant, en une quantité de 0 à 45,5 % en poids,
toutes les quantités des ingrédients étant prises par rapport au poids de la composition totale et la somme des quantités respectives des ingrédients (i)-(iv) étant de 100 % en poids.

2. Composition de polymère en couche souple au toucher suivant la revendication 1, **caractérisée en ce que** la matière thermoplastique technique polaire est choisie parmi les polycarbonates (PC), le NYLON 6,6, le NYLON 6, le polyéthylène glycol téréphtalate (PET) et le polybutylène glycol téréphtalate (PBT).

3. Composition de polymère en couche souple au toucher suivant l'une quelconque des revendications 1 à 2, **caractérisée en ce que** l'insaturation éthylénique dans les blocs de poly(diène conjugué essentiellement) des composants (ii) et (iii) après hydrogénation est de tout au plus 2 %.

4. Composition de polymère en couche souple au toucher suivant l'une quelconque des revendications 1 à 3, **caractérisée en ce que** le composant de copolymère bloc (iii) a été fonctionnalisé au moyen de groupes carboxyle, acide carboxylique, anhydride d'acide, amide, amine ou époxy introduits.

5. Composition de polymère en couche souple au toucher suivant l'une quelconque des revendications 1 à 4, **caractérisée en ce que** le composant (i) est présent à raison de 3 à 35 % en poids.

6. Composition de polymère en couche souple au toucher suivant l'une quelconque des revendications 1 à 4, **caractérisée en ce que** la quantité de composant (ii) se situe dans la gamme de 3 à 70 % en poids.

7. Composition de polymère en couche souple au toucher suivant l'une quelconque des revendications 1 à 4, **caractérisée en ce que** la quantité de composant (iii) se situe dans la gamme de 15 à 75 % en poids.

8. Composition de polymère en couche souple au toucher suivant l'une quelconque des revendications 1 à 4, **caractérisée en ce que** la quantité de composant (iv) se situe dans la gamme de 5 à 40 % en poids.

9. Composition de polymère en couche souple au toucher suivant l'une quelconque des revendications 1 à 8, **caractérisée en ce que** les blocs de poly(diène conjugué) hydrogénés du composant (iii) ont été greffés avec un acide insaturé.

10. Composition de polymère en couche souple au toucher suivant la revendication 9, **caractérisée en ce que** les blocs de poly(diène conjugué) du composant (iii) ont été greffés avec de l'acide maléique.

11. Composition de polymère en couche souple au toucher suivant l'une quelconque des revendications 1 à 10, **caractérisée en ce que** comme composant plastifiant (iv) on utilise une huile paraffinique ou des oligomères de poly(alpha-oléfine).

12. Composition de polymère multicouche, comprenant au moins une couche relativement souple au toucher comprenant au moins un copolymère bloc, provenant d'un monomère monovinyl aromatique et d'un monomère de diène conjugué, et au moins une couche d'une matière thermoplastique rigide, relativement dure, qui sont en contact intime l'une avec l'autre, **caractérisée en ce que** :
(a) la couche relativement souple au toucher comprend une composition de copolymère bloc comprenant :
(i) une matière thermoplastique technique polaire en une quantité de 1 à 50 % en poids,
(ii) une quantité de 0 à 80 % en poids d'un copolymère bloc hydrogéné sélectivement, comportant au moins deux blocs poly(monovinyl aromatiques essentiellement) et au moins un bloc de poly(diène conjugué essentiellement), l'insaturation éthylénique résiduelle après hydrogénation étant de tout au plus 5 %,
(iii) une quantité de 5 à 85 % en poids d'un copolymère bloc hydrogéné sélectivement, comportant au moins deux blocs poly(monovinyl aromatiques essentiellement) et au moins un bloc de poly(diène conjugué essentiellement), l'insaturation éthylénique résiduelle après hydrogénation étant de tout au plus 5 %, ledit copolymère bloc étant fonctionnalisé au moyen de groupes polaires introduits,
(iv) un plastifiant, en une quantité de 0 à 50 % en poids,
toutes les quantités des ingrédients étant prises par rapport au poids de la composition de copolymère bloc totale et la somme des quantités respectives des ingrédients (i)-(iv) étant de 100 % en poids; et
(b) la couche rigide, relativement dure comprend une matière thermoplastique technique polaire.

13. Composition multicouche suivant la revendication 12, **caractérisée en ce que** la couche relativement souple au toucher [composant (a)] comprend une composition de copolymère bloc suivant l'une quelconque des revendications 2 à 11.

14. Composition multicouche suivant l'une ou l'autre des revendications 13 et 14, **caractérisée en ce que** la matière thermoplastique technique polaire à utiliser comme composant (b) est choisie parmi les polyamides, les polycarbonates, le polyméthylméthacrylate et les polyesters provenant d'un acide aromatique.

15. Composition de polymère multicouche suivant l'une quelconque des revendications 13 à 15, **caractérisée en ce que** les matières thermoplastiques techniques polaires sont choisies parmi le NYLON 6,6, le NYLON 6, le polyéthylène glycol téréphtalate (PET), le polybutylène glycol téréphtalate (PBT) et les polycarbonates (PC).

16. Articles façonnés provenant d'une composition de polymère multicouche suivant l'une quelconque des revendications 12 à 15.
